# EUROPEAN PATENT SPECIFICATION

(11) **EP 3 139 857 B1**
(45) Date of publication and mention of the grant of the patent: **17.02.2021**
(21) Application number: 15789530.1
(22) Date of filing: 04.05.2015
(51) Int. Cl.: A61C 13/00, A61C 13/10, A61C 13/08, A61C 13/01, A61C 13/09, A61C 13/07

(54) **REMOVABLE DENTURE WITH METAL DENTURE TOOTH OR TEETH**
ABNEHMBARE ZAHNPROTHESE MIT METALLISCHEM ZAHNPROTHESENZAHN ODER METALLISCHEN ZAHNPROTHESENZÄHNEN
PROTHÈSE DENTAIRE AMOVIBLE AVEC DENT OU DENTS DE PROTHÈSE DENTAIRE MÉTALLIQUES

(30) Priority: 06.05.2014 US 201461989059 P
(43) Date of publication of application: 15.03.2017
(73) Proprietor: Joy Medical Devices Corporation, Kaohsiung City (TW)
(72) Inventor: Lin, Luh-yuan, Winnetke, Illinois 60093 (US); Lin, Jiin-Huey Chern, Winnetka, Illinois 60093 (US); Ju, Chien-Ping, Kansas City, MM 64137 (US)
(74) Representative: Grünecker Patent- und Rechtsanwälte PartG mbB
(86) International application number: PCT/US2015/029046
(87) International publication number: WO 2015/171495

(56) References cited:
- WO-A1-2008/035938
- DE-U1-202006 011 340
- JP-A- H08 196 551
- RU-C2- 2 214 196
- SU-A1- 1 505 531
- US-A1- 2007 105 067
- US-B2- 6 896 516
- US-B2- 7 699 610
- US-B2- 7 997 900
- MARIO R. GANDDINI ET AL: "Maxillary and mandibular overlay removable partial dentures for the restoration of worn teeth", JOURNAL OF PROSTHETIC DENTISTRY., vol. 91, no. 3, March 2004 (2004-03), pages 210-214, XP055364304, AMSTERDAM, NL ISSN: 0022-3913, DOI: 10.1016/j.prosdent.2003.12.021

## Description

### Field of the Invention

The present invention relates to a removable full or partial denture containing a linguoplate and metal occlusion of a restoring tooth or teeth with composite facing for restoring a tooth or teeth on the dental arch of a patient.

### Background of the Invention

Removable partial denture has been used through the years to replace teeth which are missing through accident and disease. The conventional partial denture has the metal framework of a metal casting which supports the acrylic teeth for missing teeth and acrylic flange for missing alveolcur bone structures and its mucosal lining. The conventional partial dentures for restoring missing teeth on the upper dental arch of the patients have a bar, strap or plate as a major connector which connects the components on one side of the dental arch to the components on the opposite side thereof, for examples anterior-posterior palatal bars, single palatal strap type, U-shaped palatal major connector, and palatal plate-type major connector. The degree of discomfort is even stronger for a patent wearing the conventional upper partial denture than who wearing the conventional lower partial denture, because the bar, strap or plate connecting both sides of the arch of the upper partial denture are right above the patient's tongue. The inventors of the present application in US patent No. 6,896,516 B2 disclose a removal partial denture containing no lingual bar, and in particular to removable partial dentures containing no palatal bar or lingual bar for restoring teeth on the upper dental arch of a patient.

The great challenge of the partial denture is to maintain the occlusal vertical dimension of mouth. Through the years of usage, due to the nature of acrylic teeth, this occlusal vertical dimension will be lost from the overuse of the acrylic teeth. RU 2214196 C2 relates to a completely removable mandibular prosthesis. SU 1505531 A1 relates to a method of producing clamp dentures

The disclosure of document JP H08196551 A aims to ameliorate the defects of the anatomical structure and function of the maxillo-facial oral system and occlusion by forming a device for restoring the ideal occlusion structure and function of a pair of dental arch dental moldings for the upper jaw and the lower jaw having the ideal occlusion dental row on a front side and a fitting part of the outside shape of the existing dental row on an inner side.

### Summary of the Invention

A primary objective of the present invention is to provide a removable full or partial denture that does not have an acrylic tooth or teeth, which are replaced by a metal denture tooth or teeth cast together with a linguoplate.

In order to accomplished the above-mentioned objective, a denture constructed in accordance with the present invention is defined in claim 1.

Preferably, the denture of the present invention further comprises a composite facing bonded to a facial surface of said at least one denture tooth. More preferably, the facial surface of said at least one denture tooth is polished or finished to have a roughness suitable for the bonding.

Preferably, the surface opposite to an occlusal surface of said at least one denture tooth has one or more recesses or grooves for receiving the resin material, and said recesses or grooves have a reduced opening to enhance the bonding.

Preferably, the resin material comprises a relatively rigid portion and a relatively soft portion, wherein the relatively rigid portion bonded to the surface opposite to an occlusal surface of said at least one denture tooth, and the soft port portion is bonded to the relatively rigid portion and is opposite to the surface of said at least one denture tooth for contacting a lining mucosa over a site or sites of the missing tooth or teeth.

Preferably, said at least one denture tooth is solid.

Preferably, said at least one denture tooth is hollow.

Preferably, said metal casting further comprises a retention mesh protruding from the linguoplate and below said at least at one denture tooth, so that the retention mesh can be embedded in a resin material bonded to a surface opposite to an occlusal surface of said at least one denture tooth.

Preferably, said metal casting further comprises an occlusal rest, a clasp, or both for engaging to a health tooth adjacent to the missing tooth of said patient, which are extended from the linguoplate.

Preferably, the denture is a partial denture.

Preferably, the denture is a full denture.

Preferably, said metal casting is made of titanium or a titanium alloy.

The titanium and titanium alloy has a hardness similar to that the natural teeth. The use of titanium metal occlusion to replace the traditional acrylic teeth has the advantage of keeping the occlusal vertical dimension better.

### Brief Description of the Drawings

Fig. 1 is a perspective view of a removable upper partial denture according to US patent No. 6,896,516 B2.
Fig. 2 is a perspective view of a removable upper partial denture according to a first preferred embodiment of the present invention, wherein parts or portions similar to those of the partial denture shown in Fig. 1 are designated by like numerals.
Fig. 3 shows a cross-sectional view of a removable partial denture made according to an example not part of the present invention.
Fig. 4 shows a cross-sectional view of a removable partial denture made according to an example not part of the present invention.
Fig. 5 show a cross-sectional view of a removable partial denture made according to a fourth preferred embodiment of the present invention.

### Detailed Description of the Invention

### The Removable Partial Denture

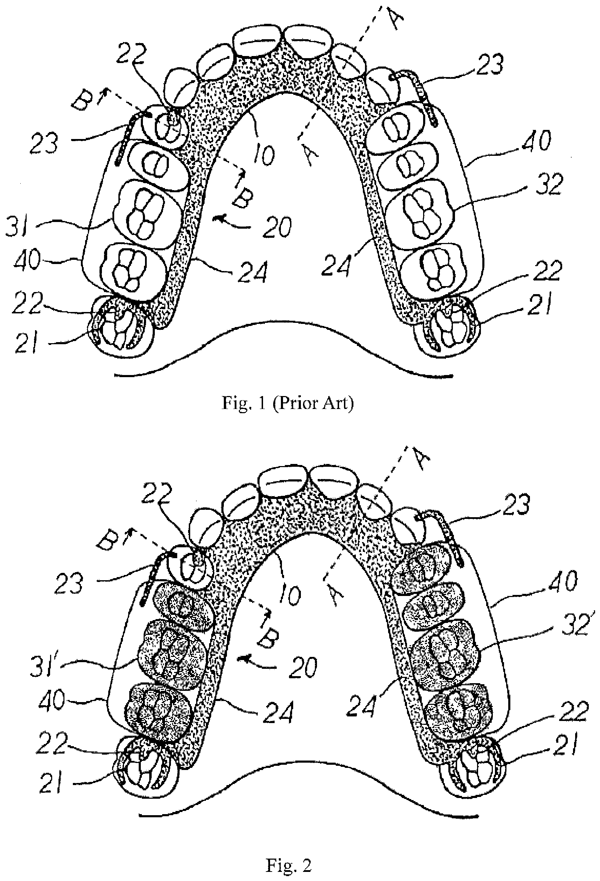

For an illustration purpose, we borrow Fig. 1 of US patent No. 6,896,516 B2 to describe a first preferred embodiment of a removable partial denture made according to the present invention. As shown in Fig. 1, the removable partial denture disclosed in US patent No. 6,896,516 B2 contains denture teeth 31 and 32; the resin material 40; and a metal casting 20. The metal casting 20 is composed of two circumferential clasps 21, three occlusal rests 22, two bar clasps 23, a linguoplate 10, and two metal frame works 24, wherein a portion of the two metal frame works 24 are embedded in the resin material 40, and can not be seen in FIG. 1. The resin material 40 bonds the denture teeth 31 and 32 to the underlying metal frameworks 24. The circumferential clasps 21 hold onto the natural teeth at both ends of the dental arch. The occlusal rests 22 and the bar clasps 23 fit into the under cut area of the labial or buccal surface of the natural teeth. The linguoplate 10 contacts all the teeth between the two denture teeth 31 and 32. A removable partial denture made according to the first preferred embodiment of the present invention shown in Fig. 2 is similar to the removable partial denture shown in Fig. 1, except that the metal casting 20 further contains metal denture teeth 31' and 32' which are cast together with the other portions of the metal casting 20, so that the acrylic denture teeth 31 and 32 shown in Fig. 1 are no longer needed.

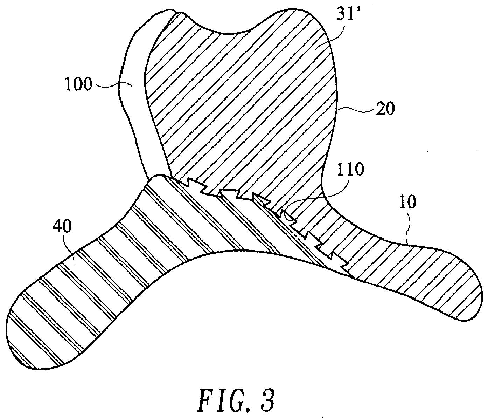

Fig. 3 shows a cross-sectional view of a removable partial denture made according to an example not part of the present invention, wherein a porcelain or composite facing 100 is bonded to a facial surface of the metal denture tooth 31' of the metal casting 20. The porcelain or composite facing 100 preferably has a natural tooth color. The resin material 40 is bonded to a surface opposite to an occlusal surface of the denture tooth 31' and a surface opposite to a lingual surface of the linguoplate 10, on which recesses or grooves 110 are formed for receiving the resin material 40, and said recesses or grooves have a reduced opening to enhance the bonding.

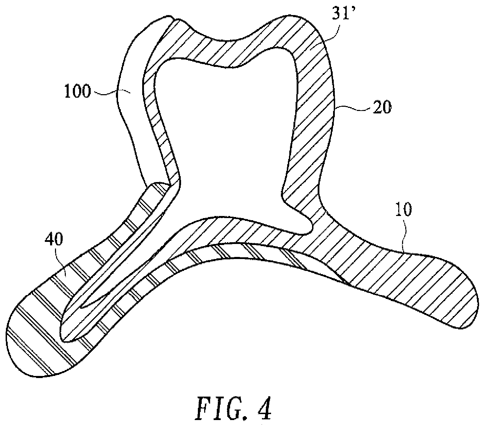

Fig. 4 shows a cross-sectional view of a removable partial denture made according to an example not part of the present invention, wherein the metal denture tooth 31' is hollow unlike the solid metal denture tooth shown in Fig. 2. Similarly, the partial denture also has a porcelain or composite facing 100 bonded to a facial surface of the metal denture tooth 31' of the metal casting 20, and a resin material 40 is bonded to a surface opposite to an occlusal surface of the denture tooth 31' and a surface opposite to a lingual surface of the linguoplate 10.

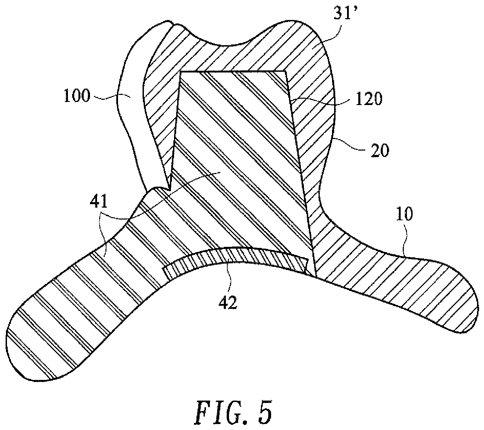

Fig. 5 shows a cross-sectional view of a removable partial denture made according to a fourth preferred embodiment of the present invention, wherein the metal denture tooth 31' has a tissue-side housing 120 or is semi-hollow unlike the hollow metal denture tooth shown in Fig. 3. A relatively rigid resin material 41 such as acrylic resin is received and cured in the tissue-side housing 120 and a relatively soft resin material 42 such as an elastomer is bonded to the bottom of the relatively rigid resin material 41 for contacting a lining mucosa over a site of the missing tooth of the patient. Similarly, the partial denture also has a linguoplate 10, and a porcelain or composite facing 100 bonded to a facial surface of the metal denture tooth 31' of the metal casting 20.

### The Clinical Procedures

The oral examination is taken. All the remaining teeth and its surrounding tissues are evaluated for their structural and functional stability.

The preliminary impression is taken and poured for study model. Customized trays are prepared for final impression.

The teeth are prepared for rest and path of insertion. Final impression is taken and poured for working models.

Bite registration is taken and models are mounted on the articulator. It is sent to the laboratory with prescription which describes the design of the RPD.

After the RPD framework (titanium) is back from the laboratory, the clinical trial is carried out for its fitness.

The framework is back to the laboratory for application of the porcelain or composite facing.

The second clinical trial is to evaluate its esthetic aspect of the RPD.

The framework is sent back to the laboratory for final process of adding the acrylic resin base. The final clinical procedure is called the insertion which includes all the adjustments: the path of insertion, the occlusal adjustment, and the retention of the clasps.

### The Characteristics of this New RPD

The characteristics of this new partial denture design are
1. The metal (titanium) occlusal surface replacing the acrylic resin occlusal surface for preventing the occlusal wear which causes the loss of vertical dimension of the occlusion.
2. Hollow or semi-hollow main body,
3. Porcelain or composite facing.
Further,

The device (RPD) intimately contacts gum tissue, increasing "suction" and "massaging" effects

The device can be solid, hollow, or partially hollow. The device is preferably partially hollow. Preferably the hollow portion has a geometry with a reduced opening which can receive the elastic cushion (by slightly squeezing/elastically deforming the cushion) and securely anchor the cushion from falling out of place.

Optionally an elastic cushion (e.g., a biocompatible elastomer, e.g., a soft resin or a rubber) can be inserted into the hollow portion, so that the elastomer can stop saliva from entering the hollow portion, as well as massage gum when biting and keep it healthier.

The crown (tooth) portion, except for the occlusal surfaces, can be further coated with porcelain or composite.

The inventive device overcomes the disadvantages of both conventional RPD (poor mechanical strength and wear resistance of acrylic teeth, loss of occlusal vertical dimension, poor biting ability, etc.) and conventional crown and bridge (damages to its neighboring teeth to the missing teeth, etc.).

The new housing design for the acrylic resin is for the easy withdrawal of the titanium casting framework.

New tissue-side housing is for the relatively soft acrylic resin to provide the continuous stimulation of the lining mucosa which covers the post-extraction side. This stimulation will decrease the rate of alveolar bone resorption due to the loss of the teeth.

## Claims

1. A denture in the form of an arch for restoring a tooth or teeth which are missing on a dental arch of a patient comprising a metal casting (20) comprising a linguoplate (10), and at least one denture tooth (31', 32') on one side of said arch, wherein said at least one denture tooth is an extension of said linguoplate,
Z wherein
each of the denture teeth (31', 32') of said denture is a metal denture tooth (31', 32') cast together with the linguoplate (10), wherein the occlusal surface of each denture tooth (31', 32') is metal, wherein said denture further comprises a resin material (41, 42) bonded to a surface opposite to an occlusal surface of said at least one denture tooth, and the resin material is not bonded to a portion of a surface opposite to a lingual surface of said linguoplate (10).

2. The denture of claim 1 further comprising a composite facing (100) bonded to a facial surface of said at least one denture tooth (31', 32').

3. The denture of claim 2 wherein the facial surface of said at least one denture tooth (31', 32') is polished or finished to have a roughness suitable for the bonding.

4. The denture of claim 1 wherein the surface opposite to the occlusal surface of said at least one denture tooth (31', 32') has one or more recesses or grooves (110) for receiving the resin material (41, 42), and said recesses or grooves (110) have a reduced opening to enhance the bonding.

5. The denture of claim 1 wherein the resin material comprises a relatively rigid portion (41) and a relatively soft portion (42), wherein the relatively rigid portion (41) bonded to the surface opposite to the occlusal surface of said at least one denture tooth (31', 32'), and the relatively soft portion (42) is bonded to the relatively rigid portion (41) and is opposite to the occlusal surface of said at least one denture tooth (31', 32') for contacting a lining mucosa over a site or sites of the missing tooth or teeth.

6. The denture of claim 1 wherein said at least one denture tooth (31', 32') is solid.

7. The denture of claim 1 wherein said at least one denture tooth (31', 32') is hollow.

8. The denture of claim 1, wherein said metal casting (20) further comprises a retention mesh protruding from the linguoplate (10) and below said at least at one denture tooth (31', 32'), so that the retention mesh can be embedded in the resin material (41, 42).

9. The denture of claim 1, wherein said metal casting (20) further comprises an occlusal rest (22), a clasp (23), or both for engaging to a health tooth adjacent to the missing tooth of said patient, which are extended from the linguoplate (10).

10. The denture of claim 1 which is a partial denture.

11. The denture of claim 1 which is a full denture.

12. The denture of claim 1 where said metal casting (20) is made of titanium or a titanium alloy.

## Patentansprüche

1. Zahnprothese in Form eines Bogens zur Wiederherstellung eines Zahns oder von Zähnen, der/die auf einem Dentalbogen eines Patienten fehlt/fehlen, umfassend ein Metallgussstück (20), das eine Linguoplatte (10) (linguoplate) umfasst, und mindestens einen Zahnprothesenzahn (31', 32') auf einer Seite des Bogens, wobei der mindestens eine Zahnprothesenzahn eine Erweiterung der Linguoplatte ist,
wobei jeder der Zahnprothesenzähne (31', 32') der Zahnprothese ein zusammen mit der Linguoplatte (10) gegossener Metallzahnprothesenzahn (31', 32') ist, wobei die Okklusionsfläche eines jeden Zahnprothesenzahns (31', 32') Metall ist, wobei die Zahnprothese des Weiteren ein Harzmaterial (41, 42) umfasst, das mit einer Oberfläche verbunden ist, die einer Okklusionsfläche des mindestens einen Zahnprothesenzahns gegenüberliegt, und das Harzmaterial nicht mit einem Teil einer Oberfläche verbunden ist, die einer Lingualfläche der Linguoplatte (10) gegenüberliegt.

2. Zahnprothese nach Anspruch 1, die des Weiteren eine mit einer fazialen Oberfläche des mindestens einen Zahnprothesenzahns (31', 32') verbundene Komposit-Verkleidung (100) umfasst.

3. Zahnprothese nach Anspruch 2, wobei die faziale Oberfläche des mindestens einen Zahnprothesenzahns (31', 32') poliert oder nachbearbeitet wird, um eine für die Bindung geeignete Rauigkeit aufzuweisen.

4. Zahnprothese nach Anspruch 1, wobei die der Okklusionsfläche des mindestens einen Zahnprothesenzahns (31', 32') gegenüberliegende Oberfläche eine oder mehrere Vertiefungen oder Rillen (110) zur Aufnahme des Harzmaterials (41, 42) aufweist, und die Vertiefungen oder Rillen (110) eine reduzierte Öffnung aufweisen, um die Bindung zu verstärken.

5. Zahnprothese nach Anspruch 1, wobei das Harzmaterial einen relativ starren Teil (41) und einen relativ weichen Teil (42) umfasst, wobei der relativ starre Teil (41) mit der der Okklusionsfläche des mindestens einen Zahnprothesenzahns (31', 32') gegenüberliegenden Oberfläche verbunden ist, und der relativ weiche Teil (42) mit dem relativ starren Teil (41) verbunden ist und der Okklusionsfläche des mindestens einen Zahnprothesenzahns (31', 32') gegenüberliegt, um mit einer Auskleidungsschleimhaut über der oder den Stellen des fehlenden Zahns oder der fehlenden Zähne in Kontakt zu kommen.

6. Zahnprothese nach Anspruch 1, wobei der mindestens eine Zahnprothesenzahn (31', 32') kompakt (solid) ist.

7. Zahnprothese nach Anspruch 1, wobei der mindestens eine Zahnprothesenzahn (31', 32') hohl ist.

8. Zahnprothese nach Anspruch 1, wobei das Metallgussstück (20) des Weiteren ein Retentionsgitter (retention mesh) umfasst, das aus der Linguoplatte (10) und unterhalb des mindestens einen Zahnprothesenzahns (31', 32') herausragt, so dass das Retentionsgitter in das Harzmaterial (41, 42) eingebettet werden kann.

9. Zahnprothese nach Anspruch 1, wobei das Metallgussstück (20) des Weiteren eine okklusale Auflage (22), eine Klammer (23) oder beides für einen Eingriff mit einem gesunden Zahn, der an den fehlenden Zahn des Patenten angrenzt, umfasst, die sich aus der Linguoplatte (10) erstrecken.

10. Zahnprothese nach Anspruch 1, die eine Teilprothese ist.

11. Zahnprothese nach Anspruch 1, die eine Vollprothese ist.

12. Zahnprothese nach Anspruch 1, wobei das Metallgussstück (20) aus Titan oder einer Titanlegierung gefertigt ist.

## Revendications

1. Prothèse dentaire sous la forme d'un arc pour restaurer une dent ou des dents qui manquent sur une arcade dentaire d'un·e patient·e comprenant un moulage métallique (20) comprenant une plaque linguale (10), et au moins une dent de prothèse dentaire (31', 32') sur un côté de chaque arcade, ladite au moins une dent de prothèse dentaire étant une extension de ladite plaque linguale,
chacune des dents de la prothèse dentaire (31', 32') de ladite prothèse dentaire étant une dent de prothèse dentaire métallique (31', 32') coulée conjointement à la plaque linguale (10), la surface d'occlusion de chaque dent de prothèse dentaire (31', 32') étant métallique, ladite prothèse dentaire comprenant en outre un matériau de résine (41, 42) lié à une surface opposée à une surface d'occlusion de ladite au moins une dent de prothèse dentaire, et le matériau de résine n'étant pas lié à une portion d'une surface opposée à une surface linguale de ladite plaque linguale (10).

2. Prothèse dentaire selon la revendication 1, comprenant en outre une facette composite (100) liée à une surface faciale de ladite au moins une dent de prothèse dentaire (31', 32').

3. Prothèse dentaire selon la revendication 2, la surface faciale de ladite au moins une dent de prothèse dentaire (31', 32') étant polie ou finie pour présenter une rugosité convenant à la liaison.

4. Prothèse dentaire selon la revendication 1, la surface opposée à la surface d'occlusion de ladite au moins une dent de prothèse dentaire (31', 32') ayant un·e ou plusieurs renfoncements ou rainures (110) pour recevoir le matériau de résine (41, 42), et lesdits·dites renfoncements ou rainures (110) ayant une ouverture réduite pour améliorer la liaison.

5. Prothèse dentaire selon la revendication 1, le matériau de résine comprenant une portion relativement rigide (41) et une portion relativement molle (42), la portion relativement rigide (41) liée à la surface opposée à la surface d'occlusion de ladite au moins une dent de prothèse dentaire (31', 32'), et la portion relativement molle (42) étant liée à la portion relativement rigide (41) et étant opposée à la surface d'occlusion de ladite au moins une dent de prothèse dentaire (31', 32') pour la mise en contact d'une muqueuse de revêtement sur un site ou des sites de la dent ou des dents manquante·s.

6. Prothèse dentaire selon la revendication 1, ladite au moins une dent de prothèse dentaire (31', 32') étant pleine.

7. Prothèse dentaire selon la revendication 1, ladite au moins une dent de prothèse dentaire (31', 32') étant creuse.

8. Prothèse dentaire selon la revendication 1, ledit moulage métallique (20) comprenant en outre un filet de rétention faisant saillie depuis la plaque linguale (10) et en-dessous de ladite au moins une dent de prothèse dentaire (31', 32'), afin que le filet de rétention puisse être enchâssé dans le matériau de résine (41, 42).

9. Prothèse dentaire selon la revendication 1, ledit moulage métallique (20) comprenant en outre un appui d'occlusion (22), un crochet (23), ou les deux pour la mise en prise d'une dent saine adjacente à la dent manquante dudit·de ladite patient·e, qui s'étendent depuis la plaque linguale (10).

10. Prothèse dentaire selon la revendication 1, qui est une prothèse dentaire partielle.

11. Prothèse dentaire selon la revendication 1, qui est une prothèse dentaire complète.

12. Prothèse dentaire selon la revendication 1, où ledit moulage métallique (20) est constitué de titane ou d'un alliage de titane.
